# EUROPÄISCHE PATENTSCHRIFT

(11) **EP 0 731 282 B1**
(45) Veröffentlichungstag und Bekanntmachung des Hinweises auf die Patenterteilung: **11.08.1999**
(21) Anmeldenummer: 96102850.3
(22) Anmeldetag: 26.02.1996
(51) Int. Cl.: F16B 21/02

(54) **Befestigungselement**
Fastening element
Elément de fixation

(30) Priorität: 06.03.1995 DE 29503767 U
(43) Veröffentlichungstag der Anmeldung: 11.09.1996
(73) Patentinhaber: Rost & Co. GmbH, 32457 Porta Westfalica (DE)
(72) Erfinder: Lindner, Michael, 32423 Minden (DE)
(74) Vertreter: Grünecker, Kinkeldey, Stockmair & Schwanhäusser Anwaltssozietät

(56) Entgegenhaltungen:
- EP-A- 0 466 504
- WO-A-91/11940
- DE-U- 9 215 507
- US-A- 3 493 025
- US-A- 4 342 139

## Beschreibung

Die Erfindung bezieht sich auf eine Befestigungseinrichtung mit mindestens zwei Bauteilen, die jeweils einander zugeordnete Befestigungsöffnungen mit einer größeren Länge als deren Breite aufweisen und einem Befestigungselement mit einem quer zu einer Drehachse länglichen Fußteil, dessen Breite kleiner ist als jeweils die Breite der Befestigungsöffnungen, einem Schaft, dessen Breite ebenfalls kleiner ist als die Breite der Befestigungsöffnungen, und einem Auflagekopf zum Aufliegen und Anpressen an das obere Bauteil, wobei der Abstand zwischen der Oberseite des Fußteils und der Unterseite des Auflagekopfes der Gesamtdicke der Bauteile an der Verbindungsstelle angepaßt ist und wobei ein Drehen des Schaftteils von einer Einsteck- in eine Befestigungsstellung gegen eine Federkraft erfolgt.

Eine solche Befestigungseinrichtung ist z.B. aus der GB-A-1538133 bekannt. Das in dieser Druckschrift beschriebene Befestitigungselement weist einen relativ großen sich von unten bis nahezu zum Kopfteil erstreckenden Schlitz auf, der das Fußteil und den Schaft in zwei Federbeine aufteilt. Des weiteren besteht der Auflagebereich des Kopfes aus einer gegen das obere Bauteil preßbaren Federscheibe. Der Schaft weist zwei Querschnittsbereiche auf, die jeweils an die Befestigungsöffnungen der Bauteile angepaßt sind. Der Schaft weist im wesentlichen in seiner Grundform einen quadratischen Querschnitt auf, wobei jeweils zwei diagonal gegenüberliegenden Ecken der Schaftbereiche derart abgerundet sind, daß sich der Schaft über diese Abrundungen innerhalb der Befestigungsöffnungen aufgrund des Zusammenfederns der Federbeine drehen läßt. Nach einer erfolgten 90° Drehung, bei der sich mittels der auf der Oberseite des Fußteils angeordneten Rampen die Bauteile zwischen der Federscheibe des Auflagekopfes und dem Fußteil einklemmen lassen, federn die Federbeine wieder in ihre Ausgangslage zurück. Die Befestigung der Bauteile erfolgt somit durch die Klemmung in Axialrichtung des Befestigungselementes. Im großen und ganzen haben sich solche Befestigungselemente bewährt, jedoch bestehen große Bestrebungen derartige Befestigungselemente aufgrund der relativ hohen Herstellungskosten zu vereinfachen.

Die der vorliegenden Erfindung zugrunde liegende Aufgabe besteht darin, eine Befestigungseinrichtung der eingangs genannten Art zumindest für die Verbindung bestimmter Bauteile kostengünstiger auszugestalten.

Diese Aufgabe wird erfindungsgemäß dadurch gelöst, daß das untere Bauteil eine C-Profilschiene ist und die Befestigungsöffnung durch die Längsöffnung der C-Profilschiene gebildet ist, daß die Querschnittslänge des Schafts zumindest geringfügig größer ist als die Breite der Befestigungsöffnungen und der Übergang der Querschnittslängskanten und Breitenkanten des Schafts an zwei diagonal gegenüberliegenden Bereichen derart abgerundet ist, daß ein begrenztes Drehen des Schaftteils mit ansteigender Klemmwirkung von der Einsteck- in die Befestigungsstellung entgegen der Federwirkung der die Längsöffnung begrenzenden Schenkel der C-Profilschiene ermöglicht ist, und daß der Schaft im wesentlichen unnachgiebig ausgestaltet ist.

Zur Erläuterung der Erfindung sei erwähnt, daß insbesondere auf dem Gebiet des Vorwandelementebaus für Sanitärinstallation C-Profilschienen ein gängiges und sehr weit verbreitetes Profil sind, welches sehr häufig auch als Befestigungsschiene zur Boden- bzw. Wandbefestigung Verwendung findet. Die vorliegende Erfindung macht sich nunmehr die Federwirkung der die Führungsöffnung der C-Profilschiene begrenzenden Schenkel zunutze. Deshalb weisen die den Befestigungsöffnungen der Bauteile zugeordneten Schaftbereiche des Befestigungselementes nicht mehr wie im Stand der Technik einen quadratischen, sondern einen zumindest leicht rechteckigen Querschnitt auf, weshalb durch die Kraftausübung des Schaftes durch eine Rotation um seine Drehachse die Schenkel der C-Profilschiene seitlich ausfedern, und eine sehr gute Befestigung bereitgestellt ist. Des weiteren werden die Schenkelbereiche, die die Führungsöffnung des C-Profils begrenzen, leicht gekippt und die Befestigungsöffnungen der anderen Bauteile ebenfalls etwas verkantet, so daß bei geeigneter Wahl des Abstandes zwischen Oberseite des Fußteils und der Unterseite des Auflagekopfes zusätzlich noch eine Axialklemmung folgt. Es sei an dieser Stelle betont, daß die Hauptklemmung des Befestigungselementes an den Bauteilen durch die Federwirkung der C-Profilschiene erfolgt. Diese Wirkungsweise führt dazu, daß das Befestigungselement massiv ausgeführt werden kann, ohne daß irgendwelche Vorkehrungen zur Erzeugung einer Federwirkung in diesem Element angeordnet sind, was zu einer drastischen Kostenreduktion bei der Herstellung führt.

Damit sich das Fußteil besser unter die entsprechenden Bereiche der C-Profilschiene drehen läßt, kann diese zwei diagonal zueinander angeordnete Rampenbereiche aufweisen.

Sollte zusätzlich noch eine entsprechend gewünschte Axialklemmung erfolgen, kann der Abstand zwischen der Unterseite des Auflagekopfes und der Oberseite des Fußteils geringfügig kleiner sein als die gesamte Dicke der Bauteile an der Verbindungsstelle. Der gewählte Abstand im Verhältnis zu der beschriebenen Gesamtdicke bestimmt entsprechend der gewählten Paßungsauswahl die Anpreßkraft.

Damit auch Bauteile mit einer C-Profilschiene verbunden werden können, deren Befestigungsöffnungen etwas andere Dimensionen aufweisen kann der Schaft in Längsrichtung gesehen mindestens zwei Querschnittsbereiche aufweisen, deren Länge, Querschnittslängskanten, Breiten und Abrundungen jeweils der Abmessung der zugeordneten Befestigungsöffnung der Bauteile angepaßt ist.

In einer weiteren Variante können auch die durch die unterschiedlichen Querschnittsbereiche gebildeten Absätze jeweils zwei diagonal zueinander angeordnete Rampenbereiche aufweisen, die auch zu einem allmählichen axialen Anziehen der Bauteile beitragen.

Bevorzugterweise kann der Auflagekopf einen scheibenförmigen Auflagebereich und einen darauf angeordneten Polygonabschnitt mit mindestens zwei Schlüsselflächen aufweisen. Der scheibenförmige Auflagenbereich wird für eine großflächige Verteilung der Preßkraft und die Schlüsselflächen am Polygonabschnitt werden zum Ansetzen eines Werkzeuges verwendet.

Insbesondere beim Einsatz von Vorwandelementen werden die Befestigungselemente in aller Regel nur ein einziges Mal eingesetzt, so daß diese aus Kunststoff, bevorzugt Polyamid mit Glasfaserverstärkung, hergestellt sein können. Selbstverständlich eignen sich auch andere Herstellungsverfahren, wie Aluminium- oder Zinkdruckgußverfahren.

Im folgenden wird die Erfindung anhand von Ausführungsbeispielen und einer Zeichnung näher erläutert. Es zeigt:
- Fig. 1: eine Seitenansicht eines Verbindungselements gemäß der vorliegenden Erfindung,
- Fig. 2: das Verbindungselement aus Fig. 1 aus einer Draufsicht,
- Fig. 3: das Verbindungselement aus Fig. 1 entlang der Linie III-III geschnitten,
- Fig. 4: eine Befestigungsstellung des mit den Bauteilen verbundenen Befestigungselements in einer verkleinerten Ansicht, und
- Fig. 5: ein zweites Ausführungsbeispiel des Befestigungselements gemäß der vorliegenden Erfindung.

Das in den Figuren dargestellte Befestigungselement gehört zur Gruppe der Befestigungselemente, die durch eine viertel Drehung um ihre Drehachse 10 in der Lage sind, Bauteile miteinander zu verbinden.

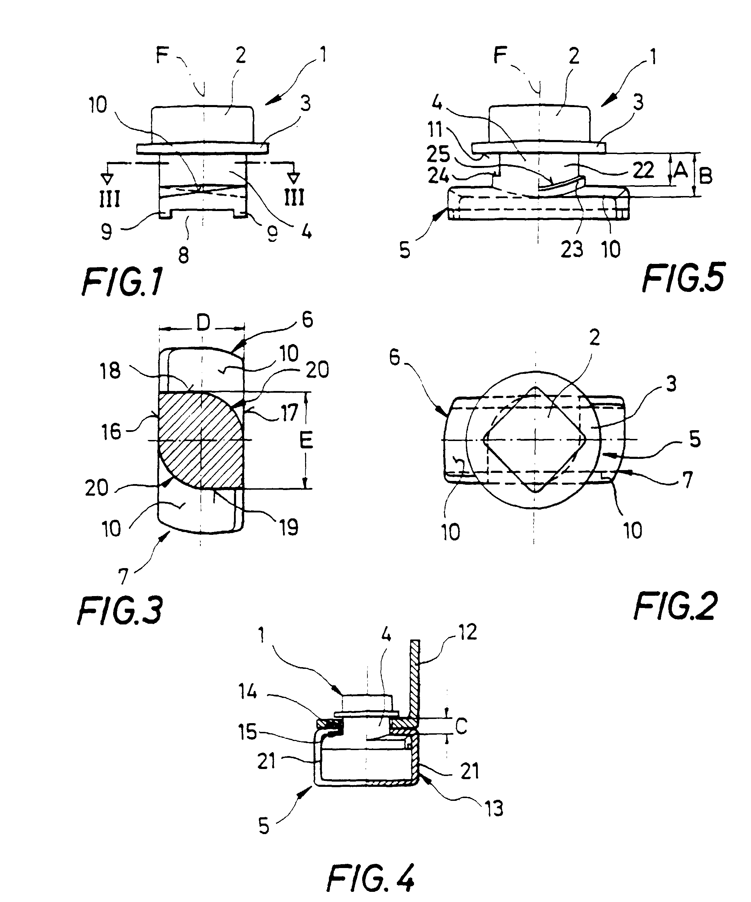

Das in den Figuren 1 bis 4 dargestellte Ausführungsbeispiel eines erfindungsgemäßen Befestigungselementes umfaßt im wesentlichen einen Auflagekopf 1 mit einem Vierkantabschnitt 2 und einem darunter angeordneten, scheibenförmigen Auflagebereich 3, einen Schaft 4 und einen am unteren Ende des Schafts 4 angeordneten Fußteil 5.

Das Fußteil 5 weist einen im wesentlichen rechteckigen Querschnitt auf, wobei zwei diagonal gegenüberliegende Ecken 6, 7 leicht abgeschrägt sind. Des weiteren befindet sich auf der Unterseite des Fußteils eine durchgehende Nut 8, so daß jeweils an den Außenlängskanten der Unterseite des Fußteils 5 ein Steg 9 gebildet ist. Die Oberseite des Fußteils 5 weist jeweils auf beiden Seiten des Schafts 4 einen Rampenbereich 10 auf. Die Rampenbereiche 10 liegen am Fußteil 5 diagonal gegenüber und weisen eine gegengerichtete Neigung auf. Der Abstand A zwischen der Oberseite des Fußteils 5 und der Unterseite 11 des Auflagekopfes 1 ist geringfügig kleiner gewählt, als die Gesamtdicke C der beiden zu verbindenden Bauteile 12, 13 an deren Verbindungsbereich.

Die Breite D des gesamten Befestigungselementes und somit die Breite des Fußteils 5 und des Schaftes 4 ist kleiner als die kleinste Befestigungsöffnung 14 oder 15. Die Befestigungsöffnung 15 in dem unteren Bauteil 13, einer C-Profilschiene, wird durch deren Führungsöffnung, die sich über ihre gesamte Länge erstreckt, gebildet.

Der Schaft 4 weist eine Querschnittslänge E auf, die geringfügig größer ist als die Breite der Befestigungsöffnungen 14, 15. Die Maßunterschiede zwischen der Breite D und der Querschnittslänge E können sehr klein gehalten werden und brauchen lediglich sicherzustellen, daß das Befestigungselement in der Einsteckstellung leicht in die Befestigungsöffnung 14, 15 über die Seitenflächen 16, 17 einführbar sind und in der Befestigungsstellung die Querflächen 18, 19 die Seiten der Befestigungsöffnung 14, 15 verspannen. Der Übergang zwischen den Seitenflächen 16, 17 zu den Querflächen 18, 19 am Schaft 4 erfolgt jeweils durch eine Abrundung 20, die dafür sorgt, daß die Klemmkraft beim Drehen allmählich ansteigt.

Im folgenden wird die Wirkungs- und Funktionsweise der vorliegenden Erfindung anhand des oben beschriebenen Ausführungsbeispiels näher erläutert.

Das Bauteil 12 und die C-Profilschiene 13 werden mit ihren Befestigungsöffnungen 14, 15 aufeinander angeordnet und das Befestigungselement in seiner in der Fig. 1 gezeigten Stellung in die Befestigungsöffnung 14, 15 eingeführt, bis der Auflagekopf 1 mit seinem scheibenförmigen Auflagebereich 3 auf dem oberen Bauteil 12 aufliegt. Durch Ansetzen eines Schlüssels am Vierkantabschnitt 2 wird nun das Befestigungselement in die in Fig. 4 gezeigte Befestigungsstellung durch maximal eine viertel Umdrehung gedreht. Dabei gleiten die Abrundungen 20 an den Seitenflächen der Befestigungsöffnungen 14, 15 entlang und erhöhen allmählich den Anpreßdruck. Da die Befestigungsöffnung 15 der C-Profilschiene 13 sich über deren gesamte Länge erstreckt, können die Schenkel 21 der C-Profilschiene nach außen wegfedern, wodurch eine Klemmkraft am Befestigungselement erzeugt wird. Durch weiteres Drehen des Befestigungselementes bis die Querflächen 18, 19 mit den entsprechenden Flächen der Befestigungsöffnungen 14, 15 in Anlage sind, kann durch geeignete Wahl der Maße der Befestigungsöffnung 14, 15 und der Querschnittslänge E eine gewollte Klemmkraft erzeugt werden. Es sei aber an dieser Stelle erwähnt, daß je nach Auswahl der Abmaße keine viertel Drehung und eine Anlage der Querflächen 18, 19 nötig sind, um eine ausreichende Klemmwirkung zu erzielen. Gleichzeitig schieben sich bei diesem Vorgang die Rampenbereiche 10 des Fußteils 5 unter die die Befestigungsöffnung 15 der C-Profilschiene 13 begrenzenden Schenkelbereiche. Da der Abstand A von der Oberseite des Fußteils 5 zur Unterseite des Auflagekopfes 1 etwas geringer ist als die Gesamtbreite C der Bauteile 12, 13 an ihrem Befestigungsbereich und der Abstand B von der Unterseite 11 des Auflagekopfes 1 zur Vorderkante des Rampenbereiches 10 größer ist als die Dicke C stellt sich eine allmählich sich erhöhende Klemmkraft auch in Axialrichtung ein. Zugute kommt hierbei, daß durch das Wegfedern der Schenkel 21 der C-Profilschiene sich die die Befestigungsöffnung 15 begrenzenden Bereiche etwas verkanten und ebenfalls eine Federwirkung in Axialrichtung ausüben.

Im folgenden wird anhand der Fig. 5 ein zweites Ausführungsbeispiel der vorliegenden Erfindung näher erläutert. Um Wiederholungen zu vermeiden, wird nur auf die wesentlichen Unterschiede eingegangen, wobei für gleiche und ähnliche Bauteilbereiche die gleichen Bezugsziffern verwendet werden.

Das in Fig. 5 gezeigte Befestigungselement ist an eine C-Profilschiene 13 und ein Bauteil 12 angepaßt, die Befestigungsöffnungen 14, 15 von unterschiedlichen Dimensionen aufweisen, und deren Dicken ebenfalls unterschiedlich sind. Hierzu weist der Schaft 4 einen ersten Querschnittsbereich 22 und einen zweiten Querschnittsbereich 23 auf. Die Querschnittsform der Querschnittsbereiche 22, 23 ist im wesentlichen identisch und unterscheidet sich nur durch deren an die Befestigungsöffnungen 14, 15 angepaßte Größe. Zur Unterstützung der Axialvorspannung kann der durch die unterschiedliche Größe der Querschnittsbereiche 22, 23 entstandene Absatz ebenfalls einen Rampenbereich 25 aufweisen.

Die Befestigungselemente gemäß der vorliegenden Erfindung können aus den verschiedensten Materialien hergestellt werden. Jedoch haben sich Kunststoffe, wie Polyamid mit Glasfaserverstärkung oder Aluminium- oder Zinkdruckgußteile als vorteilhaft herausgestellt.

## Patentansprüche

1. Befestigungseinrichtung mit mindestens zwei Bauteilen (12, 13), die jeweils einander zugeordnete Befestigungsöffnungen (14, 15) mit einer größeren Länge als deren Breite aufweisen und einem Befestigungselement mit einem quer zu einer Drehachse (F) länglichen Fußteil (5), dessen Breite (D) kleiner ist als jeweils die Breite der Befestigungsöffnungen (14, 15), einem Schaft (4), dessen Breite (D) ebenfalls kleiner ist als die Breite der Befestigungsöffnungen (14, 15), und einem Auflagekopf (1) zum Aufliegen und Anpressen an das obere Bauteil (12), wobei der Abstand (A) zwischen der Oberseite des Fußteils (5) und der Unterseite (11) des Auflagekopfes (1) der Gesamtdicke (C) der Bauteile (12, 13) an der Verbindungsstelle angepaßt ist und wobei ein Drehen des Schaftteils (4) von einer Einsteck- in eine Befestigungsstellung gegen eine Federkraft erfolgt, **dadurch gekennzeichnet**, daß das untere Bauteil (13) eine C-Profilschiene ist und die Befestigungsöffnung (15) durch die Längsöffnung der C-Profilschiene gebildet ist, daß die Querschnittslänge (E) des Schafts (4) zumindest geringfügig größer ist als die Breite der Befestigungsöffnungen (14, 15) und der Übergang der Querschnittslängskanten und Breitenkanten des Schafts (4) an zwei diagonal gegenüberliegenden Bereichen (20) derart abgerundet ist, daß ein begrenztes Drehen des Schaftteils (4) mit ansteigender Klemmwirkung von der Einsteck- in die Befestigungsstellung entgegen der Federwirkung der die Längsöffnung (15) begrenzenden Schenkel (21) der C-Profilschiene (13) ermöglicht ist, und daß der Schaft (4) im wesentlichen unnachgiebig ausgestaltet ist.

2. Befestigungseinrichtung nach Anspruch 1, **dadurch gekennzeichnet**, daß das Fußteil (5) zwei diagonal zueinander angeordnete Rampenbereiche (10) aufweist.

3. Befestigungseinrichtung nach Anspruch 1 oder 2, **dadurch gekennzeichnet,** daß der Abstand (A) zwischen der Unterseite (11) des Auflagekopfes (1) und der Oberseite des Fußteils (5) geringfügig kleiner ist als die Gesamtdicke (C) der Bauteile (12, 13) an der Verbindungsstelle.

4. Befestigungseinrichtung nach Anspruch 1 oder 2, **dadurch gekennzeichnet**, daß der Schaft (4) in Längsrichtung gesehen mindestens zwei Querschnittsbereiche (22, 23) aufweist, deren Länge, Querschnittslängskanten, Breiten und Abrundungen (20) jeweils der Abmessung der zugeordneten Befestigungsöffnung (14, 15) der Bauteile (12, 13) angepaßt ist.

5. Befestigungseinrichtung nach Anspruch 4, **dadurch gekennzeichnet,** daß an den durch die unterschiedlichen Querschnittsbereiche (22, 23) gebildeten Absätze (24) jeweils diagonal zueinander angeordnete Rampenbereiche (25) vorgesehen sind.

6. Befestigungseinrichtung nach Anspruch 1 bis 5, **dadurch gekennzeichnet**, daß der Auflagekopf (1) einen scheibenförmigen Auflagebereich (3) und einen darauf angeordneten Polygonabschnitt (2) mit mindestens zwei Schlüsselflächen aufweist.

7. Befestigungseinrichtung nach Anspruch 1 bis 6, **dadurch gekennzeichnet**, daß dieses aus Kunststoff, bevorzugt Polyamid mit Glasfaserverstärkung, hergestellt ist.

## Claims

1. Fixing device with at least two components (12, 13) which have co-operating fixing openings (14, 15) whose length is greater than their width and with a fixing element comprising a foot part (5) which is elongated transversely with respect to an axis of rotation (F) and whose width (D) is smaller than that of the fixing openings (14, 15), a shank (4) whose width (D) is likewise smaller than that of the fixing openings (14, 15), and a bearing head (1) to bear and exert pressure on the upper component (12), the distance (A) between the upper face of the foot part (5) and the underside (11) of the bearing head (1) being matched to the total thickness (C) of the components (12, 13) at the point of connection, the shank part (4) turning against spring force upon being turned from an insertion position to a fixing position, **characterized in that** the lower component (13) is a C-section rail and the fixing opening (15) is formed by the longitudinal opening of the C-section rail, in that the cross-sectional length (E) of the shank (4) is at least slightly greater than the width of the fixing openings (14, 15) and the transitions between the long and short sides of the cross-section of the shank (4) are rounded in two diagonally opposite regions (20) so as to permit limited turning of the shank part (4) with increasing gripping effect from the insertion position to the fixing position against the spring action of the arms (21) of the C-section rail (13) bounding the longitudinal opening (15), and in that the shank (4) is essentially unbending.

2. Fixing device according to Claim 1, **characterized in that** the foot part (5) has two diagonally opposing ramp regions (10).

3. Fixing device according to Claim 1 or Claim 2, **characterized in that** the distance (A) between the underside (11) of the bearing head (1) and the upper face of the foot part (5) is slightly smaller than the total thickness (C) of the components (12, 13) at the point of connection.

4. Fixing device according to Claim 1 or Claim 2, **characterized in that** the shank (4), viewed in the longitudinal direction, has at least two cross-sectional portions (22, 23) of which the length and cross-sectional long side, width and roundings (20) are matched to the corresponding dimensions of the associated fixing opening (14, 15) in the components (12, 13).

5. Fixing device according to Claim 4, **characterized in that** diagonally opposing ramp regions (25) are provided on the shoulders (24) formed by the portions of different cross-section (22, 23).

6. Fixing device according to Claims 1 to 5, **characterized in that** the bearing head (1) has a disc-shaped bearing portion (3) surmounted by a polygonal portion (2) with at least two spanner flats.

7. Fixing device according to Claims 1 to 6, **characterized in that** it is made of plastic material, preferably glass fibre reinforced polyamide.

## Revendications

1. Dispositif de fixation avec au moins deux éléments de construction (12, 13) lesquels présentent à chaque fois des ouvertures de fixation (14, 15) avec une longueur plus grande que leur largeur et se correspondant l'une l'autre, et un élément de fixation avec un pied (5) de forme oblongue perpendiculaire à un axe de rotation (F) et dont la largeur (D) est à chaque fois plus petite que la largeur des ouvertures de fixation (14, 15), un corps (4) dont la largeur (D) est également plus petite que la largeur des ouvertures de fixation (14, 15), et une tête d'appui (1) pour reposer et presser contre l'élément de construction supérieur (12), la distance (A) entre la face supérieure du pied (5) et la face inférieure (11) de la tête d'appui (1) étant ajustée à l'épaisseur totale (C) des éléments de construction (12, 13) au niveau de la liaison et pour lequel une rotation du corps (4) d'une position d'enfichage à une position de fixation s'effectue contre une force élastique, **caractérisé en ce que** l'élément de construction inférieur (13) est un rail à profil en C et l'ouverture de fixation (15) est formée à travers l'ouverture longitudinale du rail à profil en C, en ce que la longueur de section (E) du corps (4) est au moins légèrement plus grande que la largeur des ouvertures de fixation (14, 15) et la transition entre les arêtes longitudinales de la section et les arêtes transversales du corps (4) est, au niveau de deux domaines (20) se faisant face de façon diagonale, arrondie de telle sorte qu'une rotation limitée du corps (4), avec un effet de blocage croissant, à partir de la position d'enfichage vers la position de fixation, contre l'effet élastique des ailes (21) du rail à profil en C (13) limitant l'ouverture longitudinale (15), est rendue possible, et que le corps (4) est pour l'essentiel formé de façon inflexible.

2. Dispositif de fixation selon la revendication 1, **caractérisé en ce que** le pied (5) présente deux domaines de rampes (10) disposés diagonalement l'un par rapport à l'autre.

3. Dispositif de fixation selon la revendication 1 ou 2, **caractérisé en ce que** la distance (A) entre la face inférieure (11) de la tête d'appui (1) et la face supérieure du pied (5) est légèrement plus faible que l'épaisseur totale (C) des éléments de construction (12, 13) au niveau de la liaison.

4. Dispositif de fixation selon la revendication 1 ou 2, **caractérisé en ce que** le corps (4) présente, selon sa direction longitudinale, au moins deux domaines de section (22, 23) dont les longueurs, les arêtes longitudinales de section, les largeurs et les arrondis (20) sont à chaque fois adaptés aux dimensions de l'ouverture de fixation (14, 15) correspondante des éléments de construction (12, 13).

5. Dispositif de fixation selon la revendication 4, **caractérisé en ce qu'**au niveau des saillies (24) formées par les différents domaines (22, 23) sont prévus des domaines de rampes (25) disposés de façon diagonale l'un par rapport à l'autre.

6. Dispositif de fixation selon la revendication 1 à 5, **caractérisé en ce que** la tête d'appui (1) présente une zone d'appui (3) en forme de disque et une portion polygonale (2) disposée sur celle-ci avec au moins deux surfaces à clé.

7. Dispositif de fixation selon la revendication 1 à 6, **caractérisé en ce que** celui-ci est fabriqué à partir de matières synthétiques, de préférence du polyamide avec un renforcement en fibres de verre.
